# EUROPEAN PATENT SPECIFICATION

(11) **EP 1 675 893 B1**
(45) Date of publication and mention of the grant of the patent: **28.11.2007**
(21) Application number: 04794309.7
(22) Date of filing: 06.10.2004
(51) Int. Cl.: C08J 5/18, C08K 3/22

(54) **METHOD TO IMPROVE THE CLING PERFORMANCE OF FILM PRODUCTS**
VERFAHREN ZUR VERBESSERUNG DER HAFTLEISTUNG VON FILMPRODUKTEN
PROCEDE D'AMELIORATION DE LA PERFORMANCE D'AUTOADHERENCE DE PRODUITS DE TYPE FILMS

(30) Priority: 22.10.2003 US 690680
(43) Date of publication of application: 05.07.2006
(73) Proprietor: UNION CARBIDE CHEMICALS & PLASTICS TECHNOLOGY CORPORATION, Danbury, Connecticut 06817-0001 (US)
(72) Inventor: RHEE, Aaron Seung-Joon, Hillsborough, NJ 08844 (US); MIKLOWCIC, Henry, L., Flemington, NJ 08822 (US); MANDERS, Peter, W., Hudson, OH 44236 (US)
(74) Representative: Hayes, Adrian Chetwynd
(86) International application number: PCT/US2004/032908
(87) International publication number: WO 2005/042625

(56) References cited:
- WO-A-02/100153
- US-A- 5 674 618

## Description

This invention relates generally to stretch wrap thermoplastic film and, in particular, to methods to improve the performance of such.

Cling force is an important factor in the success of a stretch wrap thermoplastic film. When used in an overwrapping application, the tail of the stretched film should cling to the next stretch film layer, or two stretch film layers should cling together with an adequate level of cling force to prevent the stretch film from unwrapping during handling and transportation. Generally, cling for stretch wrap films is determined in accordance with ASTM D5458.

A number of factors are known to affect the cling force of linear low-density polyethylene resins (LLDPE). Generally, a LLDPE having lower density, higher melt index and/or higher hexane extractables has a higher cling performance. The cling force of a LLDPE resin may be increased by adding a cling agent such as polyisobutylene (PIB), a very low-density polyethylene resin (VLDPE) or other sticky materials during film extrusion. PIB is normally used for blown stretch wrap films. For a coextruded slot cast stretch wrap film, such a cling agent can be added to the skin layers when cling force of the film needs to be increased. However, due to various problems caused by such cling agents, not to mention their high cost and handling difficulties, it is extremely desirable to obtain natural (or inherent) high cling forces from LLDPE.

The current invention is a method to improve the cling force of a stretch wrap film. In one preferred embodiment, the method comprises forming a stretch wrap film from a first composition comprising at least one linear low density polyethylene resin and up to 500 ppm by weight of the total composition of ultra-fine zinc oxide, the ultra-fine zinc oxide having a mean particle size no greater than 0.05 µm.

Zinc oxide is frequently added to Ziegler-Natta catalyzed polymers to neutralize and scavenge the acidic catalyst residuals. It has now been found that proper choice of the grade of zinc oxide improves the cling force, and other characteristics, of stretch wrap films comprising linear low-density polyethylene (LLDPE).

LLDPE resins are well known. Ethylene polymers and copolymers prepared by the use of a coordination catalyst, such as a Ziegler Natta or Phillips catalyst, are generally known as linear polymers because of the substantial absence of branch chains of polymerized monomer units pendant from the backbone. Linear copolymers of ethylene and at least one α-olefin of 3 to 12 carbon atoms, preferably of 4 to 8 carbon atoms, are also well known and commercially available. As is well known in the art, the density of a linear ethylene/α-olefin copolymer is a function of both the length of the α-olefin and the amount of such monomer in the copolymer relative to the amount of ethylene, the greater the length of the α-olefin and the greater the amount of α-olefin present, the lower the density of the copolymer. LLDPE is typically a copolymer of ethylene and an α-olefin of 3 to 12 carbon atoms, preferably 4 to 8 carbon atoms (e.g., 1-butene, 1-octene, etc.), that has sufficient α-olefin content to reduce the density (e.g., 0.91 g/cm³ to 0.94 g/cm³). Polymer density is measured according to the procedure of ASTM D-792 herein unless otherwise noted. One process for making LLDPE is disclosed in USP 4,076,698 (Anderson).

The LLDPE resin is compounded with an ultra-fine zinc oxide. Such ultra-fine zinc oxides have a mean particle size less than 0.05 µm (microns). Such ultra-fine zinc oxides are commercially available, for example, from Elementis, PLC in U.K. under the tradenames NanoX™ or Decelox^{™}. The ultra fine zinc oxide comprises up to 500 ppm, preferably less than or equal to 100 ppm, more preferably 10 to 100 ppm, by weight of the total composition.

Any method of compounding that provides an intimate substantially uniform mixture of the zinc oxide throughout the LLDPE resin may be used. Preferably, the LLDPE and zinc oxides are melt compounded such as in a LCM continuous compounder.

The stretch wrap films may be made by any conventional film forming process. Such processes typically include either cast film production or blown film production. The stretchy wrap films may be single layer or coextruded multilayer film structures.

The technique of blown film extrusion is well known for the production of thin plastic films. In an advantageous process, plastics are extruded through a circular die to form a film. Air is introduced through the center of the die to maintain the film in the form of a bubble which increases the diameter of the film 2 to 6 fold, after which the bubble is collapsed onto rollers. The ratio of the diameter of the bubble to the diameter of the die is known as the blow-up ratio (BUR). There are a number of variations of such a process within the skill in the art, for instance as described in such references as USP 3,959,425; and 4,820,471 where the difference between high (referred to as "long stalk" therein) and low stalk film blowing is discussed at column 1; USP 5,284,613; and W.D. Harris, et al in "Effects of Bubble Cooling on Performance and Properties of HMW-HDPE Film Resins", Polymers, Laminations & Coatings Conference, Book 1, 1990, pages 306-317, and Moore, E.P., Polypropylene Handbook, Hanser, New York, 1996, pages 330-332.

The term "coextrusion" refers to the process of extruding two or more materials through a single die with two or more orifices arranged such that the extrudates merge together into a laminar structure, preferably before chilling or quenching. Coextrusion systems for making multilayer films employ at least two extruders feeding a common die assembly. The number of extruders is dependent upon the number of different materials comprising the coextruded film. For each different material, a different extruder is advantageously used. Thus a five-layer coextrusion may require up to five extruders although less may be used if two or more of the layers are made of the same material.

Coextrusion dies are used to form coextruded blown films. They have multiple mandrels that feed the different melt streams to the circular die lip. When feedblocks are employed to stack melt layers from two or more extruders, the resulting multilayered melt stream is then fed to the film die.

Cast film is obtained by passing a polymer melt through a rectangular die, followed by cooling via one or more chill rolls and winding. For polyethylene processing into cast film, a die gap of 0.2 to 1.5 mm is customary, and this can also be applied in the process according to the invention. Larger die gaps, for instance of 2 or 5 mm, can also be applied, variations in die geometry also being possible. It has been found that the mechanical properties of the film improve if a die gap of at least 2 mm and at most 10 mm, in particular at most 5 mm is used.

### Examples 1-2 and Comparative Samples A-D:

Since the primary function of zinc oxide is to neutralize acids in resin, Q-Panel corrosion tests were done at different levels of ultra-fine zinc oxide (NanoX) and the commercial grades of zinc oxide: i.e., Kadox-930 and Kadox-911. Q-Panel rating varies on a 1 to 10 scale as described below. The rating is determined based on the degree of corrosion incurred on the panel by the acid remaining in the resin sample. A lower value means a smaller amount of acid remained in the compounded polymer, while a higher value means a larger amount of acid remained in the compound.

The Q-Panel corrosion test is very similar to corrosion tests used by polypropylene manufacturers in the U.S. and Europe and is designed to indicate their relative affects that residuals in the polymer will have on a steel mold after long-term use of a particular polymer. The test begins by loading a mold cavity with a five-layer stack. The stack layers are as follows: (1) a 127 µm (5mil) thick aluminum foil backing plate; (2) 30 grams of resin; (3) 1 Q-Panel (#QD-36) cold-rolled with a smooth finish steel (8-12 µm (micron) surface); (4) 30 grams of test resin; and (5) a second 127 µm (5 mil) thick aluminum foil backing plate. The filled mold cavity is placed in a preheated compression press at 280° C for 10 minutes under low-pressure steam (3.5 MPa) ((500 psi)). After the 10 minutes, high-pressure steam (35 MPa) ((5,000 psi)) is applied and the assembly is allowed to cool to room temperature using the cooling cycled compression press while held under high pressure. The assembly is removed from the press and the Q-Panel plate is stripped from the resin. The Q-Panel is then placed in the steam from a boiling water bath for 10 minutes and then allowed to air dry. The Panel is then examined for rust and staining. Ratings are assigned according to the system listed below.

### Stain Rating System:

1 - Perfect, no staining.
1⁺ - Halfway between 1 and 2-.
2- - Halfway between 1⁺ and 2.
2 - Slight spotting, scattered, light tan.
3 - Scattered staining, darker brown.
4 - Approximately 50% stained, tan and brown color on surface.
5 - Heavier stain, appears to be deeper in the surface, completely tan.
6 - 80% or more covered with stain, rust. Some heavy brown spots.
7 - 100% stained, some heavy brown.
8 - 100% stained, more heavy brown, some brown drips.
9 - 100% stained, approximately 50% heavy brown, many drips.
10 - 100% heavy brown staining.

The corrosion test results are shown below in Table 1. All the samples were compounded with the same base resin DJM-1732H and the same antioxidant additives (both type and amount) at the same compounding conditions. DJM-1732H is a Ziegler-Natta catalyzed linear low density polyethylene having a density of 0.917 g/cm³ and a melt index, MI, of 3.2 dg/min. For all compounds, 1,430 ppm (aim) of Irganox-1076 was used as the primary antioxidant and 1, 550 ppm (aim) of Weston-399 as the secondary antioxidant. The base resin and additive formulation for CS A (Comparative Sample A) resin sample are the same as those for the commercial HS-7001 NT7 resin (CS D). HS-7001 NT7 is available from Union Carbide. It is seen from Table 1 that ultra-fine zinc oxide, at as low a level as 20 ppm in the resin (Example 1 (Ex 1)), neutralized the resin to about the same level as the control (CS A) (840 ppm of Kadox-911) and the commercial resin CS D.

**Table 1. Q-Panel Corrosion Test Results**

| Sample No. | ZnO Grade/Amount (ppm) | Q-Panel Raking |
|---|---|---|
| CS A Control | Kadox-911 / 840 | 2+ |
| Ex. 1 | NanoX / 20 | 2 |
| Ex. 2 | NanoX / 50 | 2- |
| CS B | Kadox-911 / 280 | 3+ |
| CS C | Kadox-930 / 840 | 3 |
| CS D HS-7001 NT7 (Commercial) | Kadox-911 / 840 | 3 |

To understand if there exist any adverse effect of ultra-fine zinc oxide on the performance of the primary antioxidant (Irganox-1076) and the secondary antioxidant (Weston 399), recycle tests were performed with the compounds shown in Table 1 and the test results are shown in Table 2. The changes of resin melt index and Oxidative Induction Time (OIT) with the number of extrusion pass up to 5 times were determined. The recycle test was to determine how the polymer samples change in melt index and OIT as they go through certain thermal and shear history through multiple extrusion. Each resin sample was extruded on a 2.54 cm (1") single screw Killion compounding extrusion line up to 5 times (5 passes) at the same set of extrusion conditions: i.e., the screw speed of 101 rpm and the barrel temperature profile of 232°C (450), 287.8°C (550), 293.3°C (560), and 293.3°C (560°F) which gave about 287.8°C (550°F) melt temperature. After the 1st, 3rd, and 5th passes, the resin samples were taken and their melt index, and OIT were determined. No adverse effect of ultra-fine zinc oxide on the resin formulation with the current antioxidants was observed during the recycle tests.

**Table 2. Recycle Test Results**

| Sample No. | Melt Index* (dg/min) | | | | OIT at 210°C (min) | | | |
|---|---|---|---|---|---|---|---|---|
| | 0 Pass | 1 Pass | 3 Pass | 5 Pass | 0 Pass | 1 Pass | 3 Pass | 5 Pass |
| CS A | 3.4 | 3.4 | 3.6 | 3.6 | 20.7 | 15.3 | 12.0 | 8.4 |
| Ex 1 | 3.4 | 3.3 | 3.5 | 3.5 | 22.2 | 17.5 | 11.9 | 8.1 |
| Ex 2 | - | - | - | - | - | - | - | - |
| CS B | 3.4 | 3.3 | 3.5 | 3.4 | 25.8 | 20.9 | 13.2 | 10.0 |
| CSC | - | - | - | - | - | - | - | - |
| CS D | 3.4 | 3.3 | 3.4 | 3.1 | 26.9 | 24.9 | 14.5 | 9.6 |

| | | | | | | | | |
|---|---|---|---|---|---|---|---|---|
| *tested in accordance with ASTM D 1238, condition 190/2.16 | | | | | | | | |

### Example 3 and Comparative Samples E and F:

To determine the effect of ultra-fine grade zinc oxide on cast stretch film performance, a series of study was carried out by preparing three different compounds (see Table 3) and converting them into 80-gauge (20.3 µm) (0.8 mils), 3-layer cast stretch film samples. All the resin samples were prepared with the same base resin DJM-1732H and the same antioxidant additives, but with different zinc oxide grades, at the same compounding conditions on an LCM compounding line. For all compounds, 1,430 ppm (target) of Irganox-1076 was used as the primary antioxidant and 1,550 ppm (target) of Weston-399 as the secondary antioxidant These compounds were converted into A (12%) / B (76%) / C (12%) structured, 3-layer film samples (20.3 µm (0.8-mil) total thickness) on a Gloucester co-extrusion slot cast film line. Each film was fabricated with the same resin in all 3 layers. These film samples were tested for hexane extractables (HEX), cling force (ASTM D-5458), and ultimate stretch and puncture on a Highlight stretch film tester. Cling force is normally determined using the test method suggested in ASTM D5458. However, the cling force reported here was determined with a slight modification on D5458. The modification was that the bottom film was stretched 150% and held (same as D5458), but the top film was stretched 150% and relaxed immediately (vs. no stretching suggested in D5458). The test results are shown below in Table 3. While the hexane extractables in these film samples were all about the same (within the experimental error), it is clearly seen that the film of Example 3 outperformed Comparative Samples E and F on cling.

**Table 3. Effect of Zinc Oxide Grades on Stretch Film Properties**

| Film Sample | ZnO Grade/ Amount (ppm) | HEXs (wt.%) | Cling Force (gm) | Ultimate Stretch(%) | Puncture (kg) ((lbs)) |
|---|---|---|---|---|---|
| Ex. 3 | NanoX/20 | 3.71 | 176 | 258 | 1.86 (4.1) |
| CS E | Kadox 911 840 | 3.76 | 161 | 237 | 1.81 (4.0) |
| CS F | Kadox-930 / 840 | 3.80 | 135 | 229 | 1.86 (4.1) |

### Examples 4-7 and Comparative Samples G-J:

Another series of study was carried out to determine the effect of zinc oxide grades and their amounts on the performance of co-extruded slot cast stretch films. As shown in Table 4.1 below, two different base resins (3 dg/min MI and 2 dg/min MI, respectively) were used to make two different sets of the compounds: i.e., Examples 4-5 and Comparative Samples G and H are one set for 3 dg/min MI resin while Examples 6-7 and Comparative Samples 1 and J are another set for 2 dg/min MI resin. This time, the actual amount of zinc oxide in each compound was determined in addition to the density, melt index, and melt flow ratio. Within a set, the same base granular resin and the same antioxidant additives, but different zinc oxides grades and amounts were compounded as specified. These resin samples were prepared under the same compounding conditions on an LCM compounding line. For all compounds, 1,430 ppm (target) of Irganox-1076 was used as the primary antioxidant and 1,550 ppm (target) of Weston-399 as the secondary antioxidant. These compounds were converted into nominal 20.3 µm (0.8 mil), 3-layer co-extruded slot cast film samples using a Gloucester co-extrusion slot cast film line under the same extrusion conditions. The film structure was A(12%)/B (76%)/C(12%) with the same resin in all three layers. The performance of these film samples were determined and shown in Table 4.2. From this table it is clearly seen that ultra-fine zinc oxide allowed higher cling performance for both base resins. Furthermore, a smaller amount of ultra-fine zinc oxide (50 ppm vs. 100 ppm) even further improved the cling performance of both base resins.

### Table 4. Effect of ZnO Grades on Slot Cast Stretch Film Properties

**Table 4.1 Properties of Compounded Resin**

| Resin Sample | ZnO Grade/ Aim Amount (ppm) | Actual ZnO Amount (ppm) | Density (g/cc) | Melt Index (dg/min) | MFR¹ (-) |
|---|---|---|---|---|---|
| CS G (Control) | Kadox-911 / 840 | 616 | 0.9195 | 3.00 | 27.8 |
| CS H | Kadox-911 / 350 | 299 | 0.9193 | 2.98 | 27.9 |
| Ex. 4 | NanoX/100 | 103 | 0.9184 | 3.06 | 28.4 |
| Ex. 5 | NanoX / 50 | 50 | 0.9186 | 2.89 | 28.4 |
| CS I (Control) | Kadox-911 / 840 | 728 | 0.9187 | 1.96 | 28.1 |
| CS J | Kadox-911 / 350 | 336 | 0.9191 | 1.98 | 28.0 |
| Ex. 6 | NanoX/100 | 122 | 0.9198 | 1.90 | 28.0 |
| Ex. 7 | NanoX / 50 | 47 | 0.9174 | 2.05 | 28.5 |

| | | | | | |
|---|---|---|---|---|---|
| ¹ Melt Flow Ratio = High Load Melt Index (190C/21.6 kg load)/Melt Index (190C/2.16 kg load) | | | | | |

**Table 4.2 Film Properties**

| Film Sample | Cling Force (gm) | HEXs (wt.%) | Ultimate Stretch (%) | Puncture (kg) ((lbs)) | Retention Beginning | Force (kg) ((lbs)) Ending |
|---|---|---|---|---|---|---|
| CS G (Control) | 133.1 | 3.68 | 276 | 1.67 (3.8) | 1.39 (3.07) | 1.16 (2.55) |
| CS H | 136.9 | 3.79 | 300 | 1.56 (3.45) | 1.35 (2.98) | 1.09 (2.40) |
| Ex.4 | 143.4 | 3.51 | 273 | 1.63 (3.59) | 1.42 (3.07) | 1.12 (2.46) |
| Ex. 5 | 152.6 | 3.40 | 276 | 1.67 (3.68) | 1.39 (3.13) | 1.17 (2.58) |
| CS I(Control) | 122.9 | 3.43 | 258 | 2.08 (4.59) | 1.75 (3.86) | 1.37 (3.02) |
| CS J | 125.6 | 3.09 | 258 | 2.15 (4.75) | 1.73 (3.82) | 1.40 (3.08) |
| Ex. 6 | 141.7 | 3.25 | 261 | 2.10 (4.63) | 1.69 (3.73) | 1.36 (2.99) |
| Ex. 7 | 158.7 | 3.42 | 242 | 1.92 (4.24) | 1.61 (3.54) | 1.29 (2.85) |

### Examples 8-9 and Comparative Samples K-L:

Another series of study shown in Table 5 below was carried out to understand the effect of ultra-fine zinc oxide on blown film performance. Blown film products can be compounded with Weston-399, Irganox-1076, Armostat-1800, and zinc stearate. Armostat-1800 is diethanolstearylamine (DESA). Although DESA is known to be an anti-static agent, it has been used for blown film products because it gives some synergistic effects with zinc stearate on neutralizing acid and improving resin color. The Comparative Sample K (control) shown in Table 5 was compounded with this blown film formulation. Other compounds in the table were made by replacing just Armostat-1800 and zinc stearate with the zinc oxide grade and its amount shown for each sample. All the compounds in the table were made with the same base resin DJM-1810H. The measured resin properties are shown in the table.

All the compounds were made on a 3.81 cm (1.5") screw Killion extrusion compounding line under the same conditions: i.e., extruder barrel temperatures of 176.7°C (350°F), 187.8°C (370°F), 198.9°C (390°F) and 204.4°C (400°F), gate temperature of 210°C (410°F), adapter temperature of 215.6°C (420°F), die temperature of 210°C (410°F) head pressure of 14.77 MPa (2,110 psi) and screw speed of 80 rpm. All the film samples were made on a 3.81cm (1.5") single screw Old Sterling blown film line at 2.01:1 BUR with a 10.16cm (4") FLM and about 21.1°C (430°F) melt temperature.

From the table, it is seen that 20 ppm of ultra-fine zinc oxide (Example 9) was sufficient to neutralize the acid in the resin. On film properties, ultra-fine zinc oxide (Example 9) improved and/or increased puncture resistance (over control), dart drop (over both control (CS K) and 300 ppm of Kadox 911 (CS L)), and stiffness of 1% Secant Modulus (over control (CS K)), but slightly lower optical properties (over control CS K) such as gloss and haze. However, the resins formulated with ultra-fine zinc oxide (both Example 8 and Example 9) allowed the films to exhibit significantly better optical properties than the resin formulated with 300 ppm of Kadox-911 (CS L). Other mechanical properties, such as dart impact, can be significantly improved, as shown by Examples 8 and 9 in Table 5.

**Table 5. Effect of ZnO Grades on Blown Stretch Film Properties**

| | **CS K (Control)** | **CS L** | **Example 8** | **Example 9** |
|---|---|---|---|---|
| **Compound Properties** | | | | |
| Acid Neutralizer | Standard blown | Kadox-911 | NanoX | NanoX |
| (amount) | Film formulation | (300 ppm) | (100 ppm) | (20 ppm) |
| Base Resin Density (g/cc) | 0.9184 | 0.9184 | 0.9184 | 0.9184 |
| Base Resin MI (dg/min) | 0.84 | 0.84 | 0.84 | 0.84 |
| Base Resin MFR (-) | 32.9 | 32.9 | 32.9 | 32.9 |
| Q-Pannel Corrosion Test | 1 | 1+ | 2 | 1+ |
| | | | | |

| **Film Properties** | | | | |
|---|---|---|---|---|
| Puncture Resistance (J/m)(in-lbs/mil) | 64.5 (14.5) | 84.6 (19.0) | 84.6 (19.0) | 84.6 (19.0) |
| Elemdorf Tear; MD/GD (gm/µm) ((gm/mil)) | 15.6 (400)/20.6 (529) | 18.7 (480)/23.8 (611) | 12.9 (332)/24.6 (631) | 14.4 (368) / 23.6 (606) |
| Dart Drop (gm/µm)(gm/mil) | 4.6 (117) | 3.7 (96) | 5.5 (140) | 8.0 (205) |
| 1% Secant Modulus, MD/TD (MPa) ((psi)) | 200.4 (28,626)/ 212.9 (30,413) | 197.7 (28,241)/ 257.2 (36,749) | 215.0 (30,713)/ 250.6 (35,807) | 199.5 (28,504)/233.1 (33,300) |
| Tensile Properties, MD/TD Yield Stress (MPa) ((psi)) | 12.4 (1,775)/11.9 (1,702) | 6.2(881)/ 11.3 (1,616) | 13,3 (1,904)/11.5 (1,644) | 13.6(1,944) / 11.4 (1,632) |
| Elongation at Break (%) | 588/859 | 520/875 | 567/921 | 568/846 |
| Peak Stress (MPa) ((psi)) | 50.8(7,251)/ 39.4 (5,629) | 52.9 (7,561)/40.0 (5,709) | 50.3 (7,184) / 41.2 (5,885) | 56.0 (8,002)/36.9 (5,273) |
| 45-degree Gloss (%) | 73.4 | 45.9 | 60.2 | 69.5 |
| Haze %/µm (%/mil) | 0.167 (4.25) | 0.429 (10.9) | 0.224 (5,69) | 0.211 (5.36) |

## Claims

1. A method to improve the cling force of a stretch wrap film, the method comprising forming a stretch wrap film from a first composition comprising at least one linear low density polyethylene resin and up to 500 ppm by weight of the total composition of ultra-fine zinc oxide, the ultra-fine zinc oxide having a mean particle size no greater than 0.05 µm.

2. The method of Claim 1 wherein the zinc oxide is present in the composition in an amount equal to or less than 100 ppm based on the weight of the total composition.

3. The method of Claim 1 wherein the zinc oxide is present in the composition in an amount between 10 to 100 ppm based on the weight of the total composition.

4. The method of Claim 1 wherein the stretch film is **characterized** as having a higher cling force than a stretch film made from a second composition differing from the first composition only in that the zinc oxide has a mean particle size greater than 0.05 µm.

5. A method to improve the cling force of a stretch wrap film, the method comprising the steps of mixing at least 1 linear low density polyethylene resin with up 500 parts per million by weight of the total composition of ultra-fine zinc oxide, the ultra-fine zinc oxide having a mean particle size no greater than 0.05 micrometers; and
forming the mixture into a stretch wrap film.

6. The method of Claim 5 wherein the mixing is conducted with the linear low density polyethylene resin in a molten state:

7. The method of Claim 5 wherein the stretch wrap film is formed by a blown film process.

8. The method of Claim 5 wherein the stretch wrap film is formed by a cast film process.

## Patentansprüche

1. Verfahren zum Verbessern der Haftkraft einer Streckfolie, wobei das Verfahren das Bilden einer Streckfolie aus einer ersten Zusammensetzung umfasst, umfassend mindestens ein lineares Polyethylenharz mit geringer Dichte und bis zu 500 ppm bezüglich des Gewichts der Gesamtzusammensetzung eines ultrafeinen Zinkoxids, wobei das ultrafeine Zinkoxid eine mittlere Teilchengröße von nicht mehr als 0,05 µm aufweist.

2. Verfahren nach Anspruch 1, worin das Zinkoxid in der Zusammensetzung in einer Menge von gleich oder weniger als 100 ppm basierend auf dem Gewicht der Gesamtzusammensetzung vorliegt.

3. Verfahren nach Anspruch 1, worin das Zinkoxid in der Zusammensetzung in einer Menge zwischen 10 und 100 ppm basierend auf dem Gewicht der Gesamtzusammensetzung vorliegt.

4. Verfahren nach Anspruch 1, worin die Streckfolie **dadurch gekennzeichnet ist, dass** sie eine höhere Haftkraft aufweist als eine Streckfolie, die aus einer zweiten Zusammensetzung hergestellt wird, die sich von der ersten Zusammensetzung nur dadurch unterscheidet, dass das Zinkoxid eine mittlere Teilchengröße von größer als 0,05 µm aufweist.

5. Verfahren zum Verbessern der Haftkraft einer Streckfolie, wobei das Verfahren die Schritte des Mischens mindestens eines linearen Polyethylenharzes mit geringer Dichte mit bis zu 500 Teilen pro Million bezüglich des Gewichts der Gesamtzusammensetzung eines ultrafeinen Zinkoxids umfasst, wobei das ultrafeine Zinkoxid eine mittlere Teilchengröße von nicht mehr als 0,05 Mikrometer aufweist; und
Formen des Gemischs zu einer Streckfolie.

6. Verfahren nach Anspruch 5, worin das Mischen mit einem linearen Polyethylenharz mit geringer Dichte in einem geschmolzenen Zustand erfolgt.

7. Verfahren nach Anspruch 5, worin die Streckfolie durch ein Blasfolienverfahren gebildet wird.

8. Verfahren nach Anspruch 5, worin die Streckfolie durch ein Gussfolienverfahren gebildet wird.

## Revendications

1. Procédé conçu pour améliorer la force d'auto-adhérence d'un film étirable d'emballage, lequel procédé comporte le fait de former un film étirable d'emballage à partir d'une première composition comprenant au moins une résine de type polyéthylène basse densité linéaire et, en une quantité représentant jusqu'à 500 ppm du poids total de la composition, de l'oxyde de zinc en particules ultrafines dont la taille moyenne vaut au plus 0,05 µm.

2. Procédé conforme à la revendication 1, dans lequel l'oxyde de zinc se trouve présent, dans la composition, en une quantité représentant au plus 100 ppm du poids total de la composition.

3. Procédé conforme à la revendication 1, dans lequel l'oxyde de zinc se trouve présent, dans la composition, en une quantité représentant de 10 à 100 ppm du poids total de la composition.

4. Procédé conforme à la revendication 1, dans lequel le film étirable a pour caractéristique de présenter une force d'auto-adhérence supérieure à celle d'un film étirable formé à partir d'une deuxième composition qui ne diffère de la première composition qu'en ceci que la taille moyenne des particules d'oxyde de zinc y est supérieure à 0,05 µm.

5. Procédé conçu pour améliorer la force d'auto-adhérence d'un film étirable d'emballage, lequel procédé comporte les étapes suivantes :
- mélanger au moins une résine de type polyéthylène basse densité linéaire avec jusqu'à 500 ppm, par rapport au poids total de la composition, d'oxyde de zinc en particules ultrafines dont la taille moyenne vaut au plus 0,05 µm ;
- et faire de ce mélange un film étirable d'emballage.

6. Procédé conforme à la revendication 5, dans lequel on effectue l'opération de mélange alors que la résine de type polyéthylène basse densité linéaire se trouve à l'état fondu.

7. Procédé conforme à la revendication 5, dans lequel le film étirable d'emballage est formé selon un procédé de soufflage de films.

8. Procédé conforme à la revendication 5, dans lequel le film étirable d'emballage est formé selon un procédé de coulée de films.
